(19)

Europäisches
Patentamt
European
Patent Office
Office européen
des brevets

(11) **EP 3 730 204 A1**

(12) **EUROPEAN PATENT APPLICATION**

(43) Date of publication:
**28.10.2020 Bulletin 2020/44**

(21) Application number: **19171246.2**

(22) Date of filing: **26.04.2019**

(51) Int Cl.:
***B01D 67/00*** (2006.01)          ***B01D 69/02*** (2006.01)
***B01D 69/12*** (2006.01)          ***B01D 69/14*** (2006.01)
***B01D 71/46*** (2006.01)          ***B01D 71/60*** (2006.01)
***C08J 9/26*** (2006.01)          ***C08J 9/36*** (2006.01)
***B01D 69/06*** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **ACIB GmbH
8010 Graz (AT)**
• **Universität für Bodenkultur Wien
1180 WIEN (AT)**

(72) Inventors:
• **SCHUSTER, Christian
8010 Graz (AT)**
• **JUNGBAUER, Alois
1180 Vienna (AT)**
• **MATZINGER, Jasmin
8010 Graz (AT)**

(74) Representative: **Gassner, Birgitta et al
REDL Life Science Patent Attorneys
Donau-City-Straße 11
1220 Wien (AT)**

(54) **ULTRATHIN MEMBRANES**

(57)     The present invention relates to an ultrathin membrane having a thickness of less than about 100 nm and exhibiting different textured surfaces, wherein one side to the membrane exhibits an uneven textured surface when compared to the other side of the membrane.

EP 3 730 204 A1

## Description

## Field of the Invention

The invention refers to ultrathin membranes, with methods of manufacturing the same and specific applications thereof.

## Background Art

Ultrathin membranes or free standing nanomembranes offer highly desirable characteristics for separation tasks regarding selectivity and transport properties. They have potential applications as separation devices in microfluidics, diagnostics and pharmaceutical formulation. Especially for mass production a barrier for wider application are currently the sophisticated production processes.

The efficiency of separation tasks addressed by membranes has increased tremendously by the introduction and advent of ultrathin separation layers in large industries such as water desalination and organic solvent nanofiltration. Such nanomembranes have been developed with different features for permeability such as slits or tortuous channel although cylindrical pores are most common. Nevertheless, in contrast to macroscopic scale, introducing pores of desired size and geometry on nanometer scale is not trivial. Therefore, manufacturing procedures are often complex and sophisticated and do not satisfy the requirements of industry or are not well suited for production processes exceeding lab-scale. The most feasible strategies and the resulting materials recently reviewed show that inorganic materials prevail. The control of size and distribution of pores is typically accompanied with a compromise with respect to production speed and/or scale. While this is true for techniques based on both, organic and inorganic materials, polymer-based approaches can be favorable due to the availability of feasible routes for mass- and large-scale production with widely established and reliable techniques. In terms of polymeric membranes with thicknesses equivalent to several molecular layers frequent approaches utilize block co-polymers, etching, lithography and self-assembly of particles or combinations of those. Another bottom-up technique in the regime of self-assembly is phase segregation in binary and ternary mixtures during spin-coating to obtain functional nanostructured thin films. During thin film formation the solvent evaporates and the system undergoes a continuous transition from its initial concentration to dry state. If the polymer components are sufficiently incompatible in terms of solubility this can lead to the formation of a 2D microemulsion from which one (or more) components can be removed selectively. Based on these principles functional separation membranes fabricated by microphase separation from mixed homopolymers are foreseeable. Accordingly, recently it was shown how nanomembranes with a cutoff suitable for the separation of proteins can be manufactured using phase separation during spin casting (Mokarian-Tabari P. et al., Eur. Phys. J. E 2010, 33, 283). The fabrication procedure relies on a ternary polymer blend in an organic solvent where one of the components forms a microemulsion within a continuous phase of the other two. This process and most of the other approaches to fabricate ultrathin membranes rely on spin coating for thin film formation. Although spin coating is a very versatile and popular method for casting of ultrathin polymer films, such films are limited in lateral size by the nature of the technique and are therefore only partially scalable. To generate a thin film the coating substrate is revolved at high speeds so that disk diameters of tens of cm are the upper limit. Furthermore, inconsistent thickness throughout the coated thin film causes variations of the resulting features which are important for membrane performance and therefore complicates the transition to different scales. This can lead to heterogeneous pore size distributions and reduce performance or even to the absence of pores and loss of function.

Although the performance of ultrathin membranes in the free-standing state is often outstanding with respect to mass transfer and selectivity it is crucial that these benefits can be maintained during translation into practical separation devices. A supporting structure is usually needed to grant additional mechanical robustness to the ultrathin membranes at scales larger than the $\mu m^2$ range. Typically, supports are porous layers of tortuous structure often orders of magnitude thicker than the separation layer although micro-fabricated highly ordered supports can also be used. Clearly, the mass transfer resistance imparted by such support layers can be kept minimal by increasing its porosity. This, however, requires the separation layer to be stable with as little support as possible making mechanical strength a key parameter to ultimately decrease mass transfer resistance of the whole separation device. Thus, in the development of new separation materials not only low mass transfer resistance but also increased mechanical and chemical robustness should be strived for.

WO2014206735 discloses an isolated waterproof polymeric nanomembrane comprising pores of different geometric shapes and of a controlled size between 10 and 1000 nm. The method of producing the same comprises the process steps of providing a sacrifice layer on a surface of a solid support and of a polymerized layer of less than 1000 nm thickness on the surface of the sacrifice layer, removing the pore templates to obtain the polymerized layer with a controlled pore size; and finally removing the sacrifice layer, thereby separating the solid support from the polymerized layer. However, this production method does not allow for large scale production of said nanomembranes.

Thus, there is still the need to provide ultrathin membranes for large scale applications which could be utilized in a variety of different industries.

## Summary of invention

It is the objective of the present invention to provide ultrathin membranes with a thickness of less than about 100 nm which exhibit different textured surfaces.

The objective is solved by the claimed subject matter.

The present invention provides for ultrathin membranes which are fabricated utilizing microphase separation during casting. An attempt to overcome some of the hurdles for the translation to a large scale industrial reality is made by migrating the procedure to the dip-coating technique.

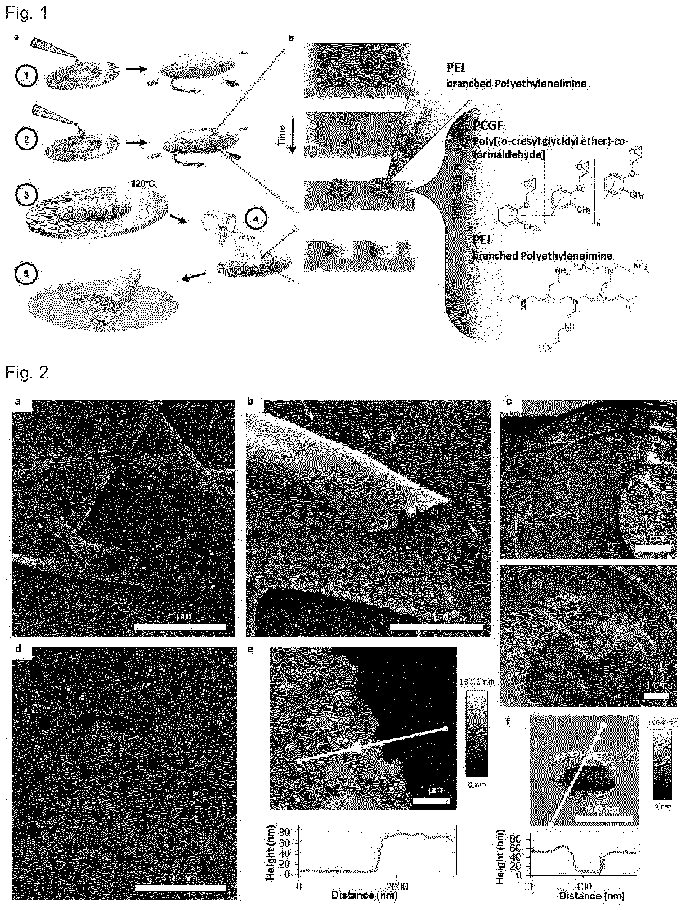

According to the invention, there is provided an ultrathin membrane having a thickness of less than about 100 nm and exhibiting different textured surfaces. Specifically, one side to the membrane exhibits an uneven textured surface when compared to the other side of the membrane (see Fig. 2b).

The ultrathin membrane according to the invention comprises pores of average diameter of 50 nm or less.

One embodiment of the invention relates to ultrathin membranes made of two-components. Specifically, the components are selected from an epoxy resin and a curing agent, preferably polyethyleneimine. A further embodiment of the invention relates to the epoxy resin poly[(o-cresyl glycidyl ether)-co-formaldehyde] (PCGF).

The possibility, that the excellent chemical and mechanical bulk properties of cured epoxy resins can be retained at the nanometer scale has been already demonstrated (Watanabe H. and Kunitake T., Adv. Mater. 2007, 19, 909), also for separation membranes using phase separation. Given the right parameters, the different solubility properties of the epoxy component and the curing agent suffice to induce phase separation phenomena during casting which are appropriate to generate perforated ultrathin membranes. Using a novolac type epoxy resin and a branched polyethyleneimine for thin film casting, coating parameters have been adjusted adequately to demonstrate the fabrication of perforated separation membranes. The facile production process yields membranes that are mildly hydrophilic which is ideal for the processing of biological fluids. Proteins and other biomolecules tend to adsorb to hydrophobic surfaces reducing the performance and suitability of the respective device. For bulging tests the membranes are freely suspended over tens of $mm^2$ highlighting their mechanical strength. Material parameters derived from these tests agree well with previously reported values suggesting an intact covalent polymer network. Fabrication parameters for the casting process have been found that allow the formation of pores which seem suitable for separations of large proteins or particles like cells or viruses. Interestingly the permeation-retention cutoff was lower than what could be expected from the pore size seen with high resolution microscopy. Furthermore, permeation rates were highly pH dependent. Both observations were attributed to electrostatic repulsion reducing the effective cross-section of the pores. Finally, since dip coating approaches are exceptionally well suited for larger scale production it is demonstrated how the developed system can be directly translated to a dip coating setup. The ultrathin films produced with dip coating display similar morphological characteristics as well as a permeability for a small protein while rejecting a large probe molecule. This proof of principle emphasizes the feasibility and potential of the developed method for a transition to large area ultrathin separation membranes and an industrial production. A method has been developed to generate nanomembranes with a thickness of 75 nm and 40 nm pores with a simple two-component epoxy resin. A novolac epoxy resin was cured with branched polyethyleneimine and a covalently crosslinked polymer membrane formed. The pore formation relied on micro-phase separation during casting and the selective dissolution of nano-domains serving as pore templates. The obtained membranes were hydrophilic and therefore specifically suitable for applications with biological fluids. Mechanical testing of the highly flexible but robust thin films revealed an ultimate tensile strength of 15 MPa and a biaxial modulus of 0.8 GPa. Proteins with a diameter of less than 12 nm can diffuse through the pores and permeation rates are pH dependent.

A further embodiment of the invention relates to the ultrathin membranes as described herein further comprising a metal coating.

The entire fabrication process has been transferred to a dip coating approach, which is more suitable for a potential large scale production.

One embodiment of the invention therefore relates to a method for producing an ultrathin membrane comprising the following steps:

> a. providing a casting solution comprising a polymer, a curing agent and a solvent,
> b. applying the casting solution on the surface of said substrate as a thin liquid film,
> c. evaporating the solvent,
> d. curing the polymer network, and
> e. removing soluble components.

The sacrificial layer according to the invention is for example a poly(sodium-4-styrenesulfonate) (PPS) layer. The casting solution according to the invention is comprised of an epoxy resin and a curing agent.

In one embodiment of the method according to the invention the substrate is immersed in the casting solution and withdrawn at a constant speed.

In one embodiment of the method according to the invention curing of the polymer network is induced by heating the substrate.

A further embodiment of the invention relates to the method as described herein further comprising the step of depositing a thin metal film on one surface of the membrane.

In addition to previous advances further progress of ultrathin films may enable new technologies in various different fields such as sensors and actuators, bioseparations, microfluidics and energy-related fields. Especially in bioseparations ultrathin films occupy a unique position as highly permeable and selective membranes which could revolutionize the industry but have yet to deliver on this potential at industrial scale. High permeation rates and enhanced selectivity have been demonstrated numerous times, often orders of magnitude higher than that of conventional separation membranes leading to significantly enhanced performance.

One embodiment of the invention relates to a method for active transport of at least one compound of interest, wherein transporter entities are assembled to the pores of the ultrathin membrane.

The transporter entities according to the invention are for example proteins.

**Brief description of drawings**

Figure1: a) The solution for casting of the sacrificial layer is dripped on the solid substrate and spin-coated (1). The membrane casting solution comprising the membrane polymers is dripped onto the sacrificial layer and spin-coated (2). Covalent crosslinking is performed at elevated temperature (3). The soluble templates are dissolved with an appropriate solvent (4). The membrane is separated from the substrate by dissolution of the sacrificial layer (5). b) Ideal representation of the phase separation during membrane formation from early stage to the dry film and eventually removed templates as well as chemical structures of epoxy resin and curative.

Figure2: a), b) and d) Scanning electron microscopy images of a nanomembrane according to claims 1-6 produced with a method according to claim 8. The differently textured surfaces are visible in a) and b). The pores are visible in d) and have an average diameter of -40 nm. c) Photograph of a membrane floating on water (top) and submerged (lower) without any support. e) and f) Atomic force microscopy images of the edge of a ripped membrane (e) and of a single large pore (f). The cross sections at the bottom show a membrane thickness of 75 nm.

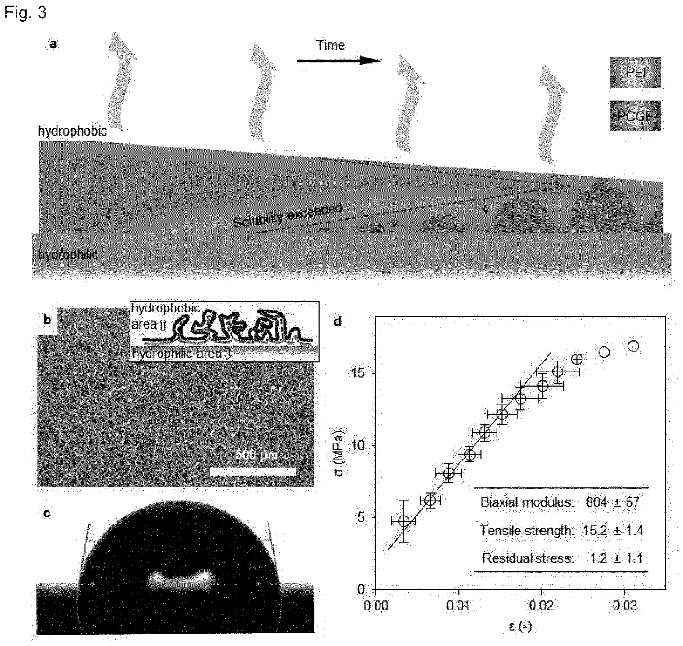

Figure 3: a) Time course of the phase separation happening during solvent evaporation at the casting process. The textured bottom surface is a result from a concentration gradient caused by the difference in interface properties between air (hydrophobic) and the sacrificial layer (hydrophilic). b) Optical microscopy image of a crumpled nanomembrane after incubation with chloroform. The crumpling is caused by a driving force to reduce hydrophilic (bottom) surface area exposed to the hydrophobic solvent. c) Water droplet sessile on the surface which is facing air during casting. The contact angle is roughly 80°. The bottom surface shows a contact angle of 40°. d) Stress-strain plot obtained from bulging tests. The table lists the derived material parameters.

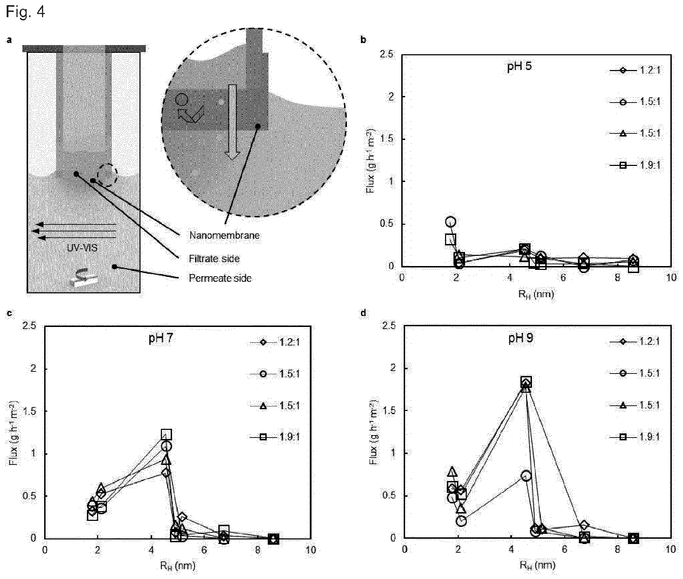

Figure 4 a) Schematic diffusion test setup with a quartz cuvette containing a permeate solution which is separated by the nanomembrane from the filtrate solution contained in a tube reaching into the permeate solution. Detail of a) The molecules contained in the filtrate solution can either permeate through the pores of the membrane or are rejected if they are too large. b)-d) Permeability of proteins of different size (hydrodynamic radius) with different membranes (alternate ratios of epoxy resin and curative) at pH 5, 7 and 9.

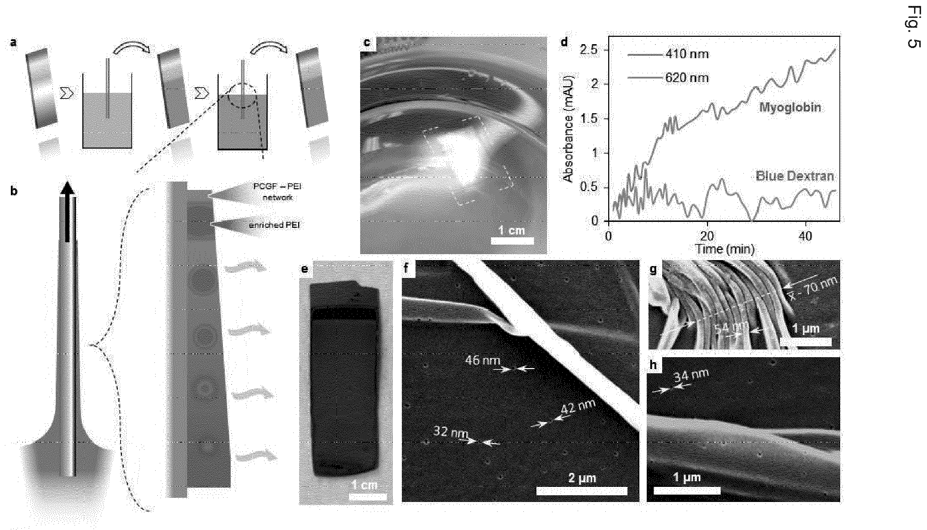

Figure 5 a) Schematic representation of the dip coating approach and its sequence. The substrate is dipped into sacrificial layer casting solution and withdrawn and, after drying, is then dipped into membrane casting solution comprising epoxy resin and curative and withdrawn at a constant speed. The dried membrane is then treated as described in steps 3 - 5 in Figure 1. b) Detailed representation of the film formation during casting of the membrane where the solvent evaporates after the substrate has left the casting solution bath. The phase separation is indicated on the right hand side similar to Figure 1b and Figure 3a. c) Photograph of a membrane produced with dip-coating floating on the surface of water. d) Absorbance of the permeate side of the diffusion test setup when myoglobin and Blue Dextran were contained in the filtrate solution. Only myoglobin is diffusion through the membrane and the absorbance is increasing correspondingly. e) Photograph of a silicon wafer piece coated with a sacrificial layer and a nanomembrane. The underlying sacrificial layer appears darker at the top side of the wafer piece. f) - h) Scanning electron microscopy images of the membranes showing pores of roughly 40 nm and a maximum average membrane thickness of 70 nm.

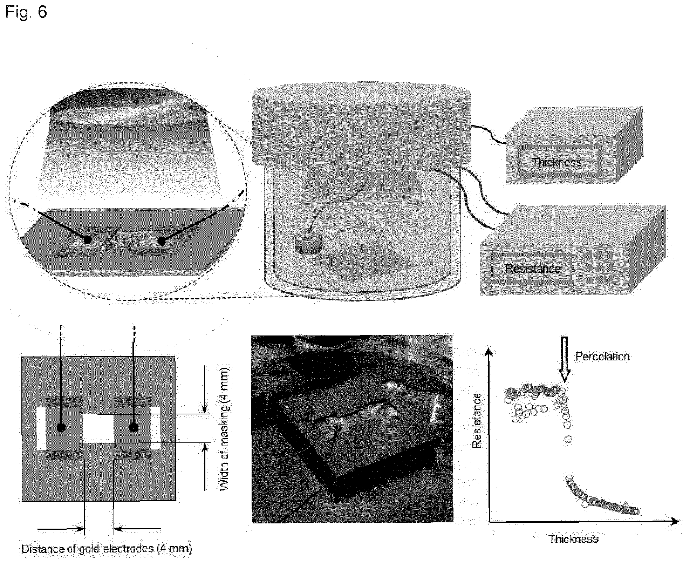

Figure 6 Top) Schematic representation of the assembly to measure the resistance of metal films during their growth on nanomembranes. The film grows between two electrodes (detail on the left hand side) while the metal atoms are falling on the polymer surface from the top. Metal thickness and the resistance between the electrodes are recorded in situ. Bottom) Geometry of the electrode and the growing metal film which is 4 by 4 mm (left) and a Photograph of the assembly (middle) as well as a typical resistance vs metal thickness result (right).

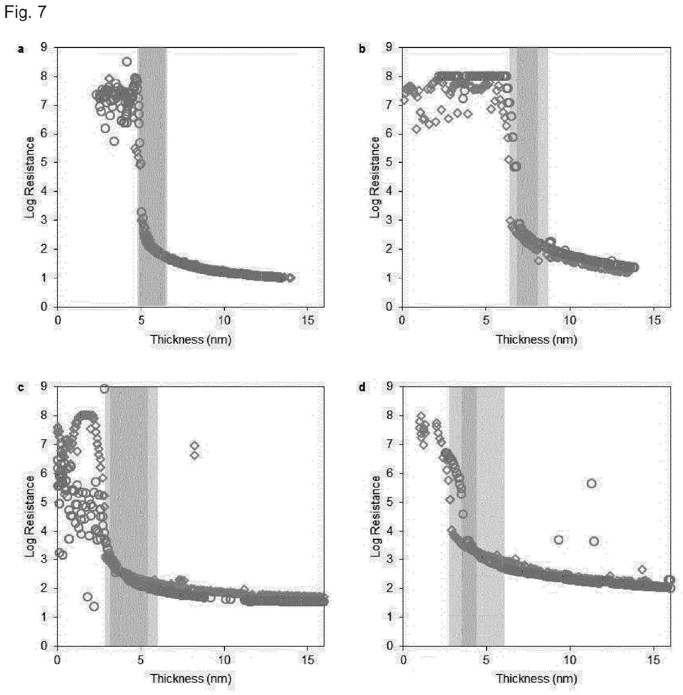

Figure 7 Resistance versus metal coating thickness plots of a) Silver, b) Gold, c) Copper and d) Nickel. The change from insulation to conducting behavior is very abrupt and is also happening at different coating thicknesses. The derived parameters are tabulated in Table 1.

**Description of embodiments**

According to the invention, the novel ultrathin membranes may be produced utilizing different processes which result in an ultrathin membrane exhibiting different textured surfaces. The ultrathin membrane as described herein exhibits on one side of the surface a smooth texture and on the opposite side an uneven texture which is due to the production process. The side of the membrane facing the surrounding air during casting is quite smooth whereas the bottom surface shows a corrugated meander type structure. The corrugated meander type structure is uneven and rough as depicted in Fig. 2b and 3b.

In the developed spin-coating procedure (Fig. 1a) the ultrathin membranes are prepared from a mixture of an epoxy resin and a curing agent.

Epoxy resins, also known as polyepoxides, are a class of reactive prepolymers and polymers which contain epoxide groups. Epoxy resins may be reacted (crosslinked) either with themselves through catalytic homopolymerisation, or with a wide range of co-reactants including polyfunctional amines, acids (and acid anhydrides), phenols, alcohols and thiols. Reaction of phenols with formaldehyde and subsequent glycidylation with epichlorohydrin produces epoxidised novolacs, such as epoxy phenol novolacs (EPN) and epoxy cresol novolacs (ECN). These are highly viscous to solid resins with typical mean epoxide functionality of around 2 to 6. The high epoxide functionality of these resins forms a highly crosslinked polymer network displaying high temperature and chemical resistance, but low flexibility. Thus, in one embodiment of the invention the epoxy resin may be poly[(o-cresyl glycidyl ether)-co-formaldehyde] (PCGF).

Uncured epoxy resins have only poor mechanical, chemical and heat resistance properties. However, good properties are obtained by reacting the linear epoxy resin with suitable curatives to form three-dimensional cross-linked structures. Curing may be achieved by reacting an epoxy with itself or by forming a copolymer with polyfunctional curatives or hardeners. In principle, any molecule containing reactive hydrogen may react with the epoxide groups of the epoxy resin. Common classes of hardeners for epoxy resins include amines, acids, acid anhydrides, phenols, alcohols and thiols.

Thus, in one embodiment of the invention the curing agent is a branched polyethyleneimine (PEI) dissolved in chloroform ($CHCl_3$).

The membrane thin film is cast onto a previously prepared sacrificial layer. The term "sacrifice layer" as used herein shall mean a layer positioned between a solid support and the ultrathin membrane of the invention, which advantageously mediates the support by the solid support during the polymer formation and/or cross-linking, and further is easily removed, thereby facilitating the delamination and separation of the ultrathin membrane from the solid support without destroying the ultrathin membrane.

The material which can be used for the sacrifice layer is not limited to a particular material as long as the material can be applied on the solid support, brought into contact with the nanomembrane or its precursor, and susceptible to removal without damaging the nanomembrane, e.g. by dissolution, evaporation or degradation, thereby separating the solid support and releasing the nanomembrane.

Preferred sacrifice layers include poly(sodium 4-styrenesulfonate) (PSS), polyvinylalcohol (PVA), polyhydroxystyrene (PHS), polyacrylamide, dextrin, dextran and/or agarose.

The sacrificial layer made of poly(sodium 4-styrenesulfonate) (PSS) can be dissolved to separate the membrane from the solid casting substrate after fabrication is finished. Solvents capable of dissolving the sacrificial layer are not particularly limited, and a solvent suitable for the purpose of use may be selected as required. One kind of these solvents alone may be used, or two or more kinds of them may be used in combination. Specific examples of suitable solvents include water, alcohols, ether alcohols, ketones, esters, aliphatic or aromatic hydrocarbons, halogenated hydrocarbons, ethers, fatty acids, organic compounds containing sulfur or nitrogen, and combinations thereof. Preferred examples include water-soluble or hydrophilic media including water, or lower alcohols such as methanol and ethanol.

During the spin-coating process the polymer mixture is spread over the sacrificial PSS layer while drag and viscous forces are primarily contributing to thinning of the liquid film. At a certain point these effects get dominated by evaporative thinning as the solvent escapes into the surrounding air whereby the concentration of polymers in the film changes continuously until eventually only a dry polymer film is left (Fig. 1b).

These changes in concentration force one of the components to enrich in small domains as soon as its solubility is exceeded. The domains continue to accrete material until the mobility of the polymer molecules in the mixture is insufficient and the film eventually dries. Conveniently, due to the nature of the system, either component is soluble in chloroform on its own but once the resin is cured, the covalent bonding renders the polymer network insoluble in most organic solvents. This covalent crosslinking is initiated at elevated temperature whereas the domains containing mostly one component are left soluble. Under appropriate conditions, these domains can span the entire thickness of the resulting film and circular perforations are formed by dissolution in an adequate solvent. Once the perforated thin film is formed it can be further processed by surface functionalization, to add supporting structures or it can be separated from the casting substrate.

The ultrathin membranes can be delaminated in such a way that they float on the surface of water. A visible membrane of roughly 3 x 3 cm is shown in Fig. 2c. They are self-standing on the water surface as well as under water where they adopt a slightly crumpled morphology. The membranes do not collapse or stick to themselves under water and when floating on the surface they do not show any irregularities suggesting hydrophilic surfaces.

The term "self-standing" as used herein with respect to an ultrathin membrane shall mean a free-standing membrane and specifically includes a separation article that is physically stable and retains its shape without any support structure such as a solid support.

Membrane pieces picked up onto bare silicon wafer pieces were investigated to estimate an average thickness of 75 nm as determined by AFM analysis (Fig. 2e) at the ripped edge of the film. Electron microscopy investigations (Fig. 2a and b) confirm a thickness in the range of tens of nanometers and that pores have been formed. The perforations are clearly visible at higher magnification (Fig. 2d) and an average diameter of about 42 nm was estimated from SEM images. From AFM analysis of pores that are large enough for the tip to penetrate it is conceivable that they span through the entire membrane thickness (Fig. 2f). This is further evidenced by a multitude of diffusion tests. The top surface is quite smooth and the bottom surface shows a corrugated meander type structure.

The bottom side of the membrane is in contact with the sacrificial layer during casting which is more hydrophilic in contrast to air. The difference of interfacial properties, which the film is subjected to during casting, is responsible for the formation of these morphologic differences as schematically outlined in Fig. 3a. During coating the hydrophobic moieties preferentially migrate to the air-interface while more hydrophilic components accumulate at the bottom interface creating a concentration gradient of the two polymer species. This gradient causes the solubility limit to be first exceeded at the bottom side initiating phase separation which then propagates to the other side as the film dries. At a later stage, phase separation also starts at the top surface so that top and bottom domains merge to perforate the entire film. This manifests in a difference in the length scale of the separated soluble domains with increasing size towards the bottom surface and explains the observed morphologies. Additionally, unmerged domains are the reason why some pores do not perforations but only depressions as indicated with arrows in Fig. 2b.. These membrane properties with the distinctly different undulating bottom surface are of considerable interest for applications in adherent cell culture, cellular- and tissue barrier and co-culture models given the thickness of less than 100 nm.

Furthermore, it was observed that some membranes seemed turbid and opaque on the silicon wafer after they had been treated with chloroform for pore template dissolution. Microscopic investigation revealed that this was caused by a morphology change where the membranes adopted a highly crumpled state (Fig. 3b). This implies that the membrane was no longer firmly attached to the sacrificial layer and could slither on the surface to form wrinkles. A PEI enriched layer adjacent to the sacrificial layer which is dissolved during chloroform treatment can justify this observation and is also consistent with the above hypothesis outlined in Fig. 3a. The driving force is likely the tendency to minimize the area of hydrophilic bottom surface that is exposed to chloroform as indicated in the inset of Fig. 3b.

Water contact angle measurements (Fig. 3c) showed an average of 79.4 $\pm$ 0.3 degrees. This is slightly hydrophilic and in the range of polymeric materials that are routinely used for separations within biological fluids and microfluidics. Thus, the membrane material is well suited for such purposes.

Generally, if the water contact angle is smaller than 90 degrees, the solid surface is considered hydrophilic and if the water contact angle is larger than 90 degrees, the solid surface is considered hydrophobic.

Bulging tests are conducted to estimate the mechanical strength and stiffness of the ultrathin films in freely suspended state. The unsupported membrane is spanning a hole of roughly 1 cm diameter and increasing hydrostatic pressure is exerted on the ultrathin film while the induced membrane deflection is monitored to infer the resulting stress and strain. From the relation of these two the ultimate tensile strength and biaxial modulus can be estimated to be 15.2 $\pm$ 1.4 MPa and 804 $\pm$ 57 MPa, respectively (Fig. 3). The low stiffness of the membranes allows high flexibility as shown in Fig. 2a and b without conceivable rupture or crack formation. This flexibility in combination with its mechanical strength can lead to higher durability of separation devices.

The suitability of the membranes to separate proteins from larger particles is assessed with seven different model proteins with increasing molecular mass: cytochrome c, myoglobin, bovine serum albumin, alcohol dehydrogenase, apoferritin and thyroglobulin. The transport across the membranes is tested in a diffusion cell as schematically depicted in Fig. 4a. In this cell the membrane separates the filtrate and the permeate side while the accumulation of protein on the permeate side is quantified by UV-Vis spectroscopy. The diffusive flux of the protein across the membrane is evidenced by an increase in absorbance over time or precluded by a stagnant spectrum. The diffusion of the model proteins across several different membrane types is investigated in order to potentially identify optimal conditions of fabrication and pore formation. The diffusion across the individual membranes is studied at three different pH values (Fig. 4b - d) and a cut off is localized around 6 nm hydrodynamic radius for all membranes for pH 7 and 9 (Fig. 4c and d). Thus, if the ratio between pore size and molecular size is lower than 3.5 (42 nm vs 12 nm) it is observed that the molecules are not able to traverse. At pH 5 the diffusion of smaller proteins across the membrane is slower than at pH 7 and 9 (Fig. 4b). The chemical composition of the membrane material is probably responsible. A swelling of the membrane material at acidic pH caused by the incorporation of H$^+$ might cause the pores to shrink. Furthermore, positive charges accumulating at the membrane surface increase electrostatic repulsion. The combination of these two effects could reduce the effective pore size and permeability significantly.

A clear trend of best conditions for membrane casting and pore formation is not conceivable from the conducted diffusion experiments with the differently produced membranes. It seems that variations within a certain range only change the amount of hydrophilic component accumulating at the bottom interface and do not alter the resulting morphology of the top surface. This dampening capability impairs the ability to adjust the resulting pore size to a certain degree. However, it shows that the protocol is robust enough to tolerate small changes. The size of the phase-separated features should be adjustable by the size of the curative. The diffusivity within the polymer molecules solution influences the size to which the phase separated domains can grow before the film has dried.

The developed system is migrated to a dip coating setup which is typically more suited for large scale or continuous casting. To this end, the whole procedure is directly applied to an approach working with a dip coating device (Fig. 5a). As with the spin coating process a film of PSS is coated onto a rectangular silicon wafer piece and is used as the sacrificial layer for membrane casting. The substrate is then immersed in a bath of membrane casting solution and withdrawn at a constant speed. A thin liquid film is left on the substrate and the solvent evaporates at room temperature until a film of dry polymer remains (Fig. 5b). The thickness of the initial liquid film is proportional to the speed at which the substrate is withdrawn which thereby directly influences the drying time and the thickness of the final membrane. In the course of the drying process phase separation phenomena take place and lead to isolated islands of soluble components (Fig. 5b). After curing of the polymer network these soluble islands can be removed with chloroform to form a perforated thin film. By the right choice of coating parameters, withdraw speed and polymer concentration, a procedure is established where robust perforated ultrathin films can be produced. Since the concept of fabrication remains unchanged, the ultrathin membranes can be released from the casting substrate as indicated in Fig. 1a and the membranes are also stable enough to be self-standing on the cm$^2$ scale (Fig. 5b). The macroscopic appearance strongly resembles the spin coated membranes (Fig. 5b) A thickness of less than 70 nm was estimated from high resolution images (Fig. 5g). Pore sizes are comparable to the ones found with the spin coating process (Fig. 5f, g and h) as determined from high resolution microscopy where an average pore diameter of 39 nm was found. The transport of myoglobin across the respective membrane in the diffusion cell (Fig. 4a) confirms (Fig. 5d) that the membranes are truly perforated and the process is successfully translated. The exclusive permeation of myoglobin with an absorbance peak of 410 nm and the simultaneous rejection of Blue Dextran with an absorbance peak at 620 nm can be immediately seen from the spectrum of the permeate solution (Fig. 5d). While the absorbance of the permeate solution at 410 nm constantly rises with time the absorbance at 620 nm does stays at blank level (Fig. 5d). This confirms both, that the membrane is intact without convective flow past the membrane and that the pores are of adequate dimensions to selectively separate the two species based on their size.

A multitude of modern technologies rely on surfaces covered with nanometer sized metal structures or thin metal films among which optoelectronics, catalysis, energy conversion and storage, (bio)sensors and actuators, microelectronics, food packaging as well as decorative applications are very frequently mentioned (Hora, J., et al., Advanced Engineering Materials 20, 1700868). Many different phenomena such as Surface Plasmon Resonance (SPR), Surface Enhanced Raman Scattering (SERS), Metal-enhanced Fluorescence (MEF) and many more are enabling these applications. A considerable portion of the above technologies is based on assemblies where the substrate in contact with the metal structure is polymer-based. Defined properties of the respective polymer-metal assembly are often crucial for functionality where the metal structure and morphology is often the dominant determining factor. Key properties of the final system drastically depend on the structure of the metal coating where it is either a prerequisite that the coating is electrically conductive or that the deposited metal is present in separated clusters of a certain (often nanometer) scale.

The potential applications of nanomembranes overlap considerably with those of thin metal films in cases such as (bio)sensors and actuators, microelectronics, energy conversion and storage as well as optoelectronics. Covalently crosslinked polymer materials are particularly interesting with their high mechanical strength, dimensional stability and chemical and thermal resistance. Additional functionality or robustness can be imparted by metallization of either the surface or the whole volume of the film. Again, the resulting properties depend strongly on the type as well as the morphology of the involved materials.

Magnetron sputter deposition is used frequently and in large scale for the deposition of thin metal films. Within a low pressure atmosphere, typically argon, a confined plasma is generated by a high potential and the ionized nuclei are accelerated towards the material source (target) to knock out atoms which then travel to the substrate and form a solid film there.

A systematic study of different metals deposited onto an ultrathin covalently crosslinked polymer film is presented. The metal thin film formation using DC magnetron sputter deposition is shown for silver, gold, copper and nickel by *in situ* resistance measurements of the growing thin films during deposition (Figure 6). For all studied metals the resistance in the metal-insulator transition can be well fitted to the scaling law of an inverse Swiss-cheese percolation mechanism with critical exponents between 1.25 and 1.36. Thus, for all deposited metals a 3D island growth mode can be presumed. The critical mass thickness ($d_c$) at which percolation occurs is determined and shows where the metal films start to be conducting. It is shown that the nanomembranes can be coated with metal films made of Copper, Gold, Nickel and Silver which are either made of isolated metal islands, a conducting network or a continuous film depending on the desired properties.

Thus, in a further embodiment of the invention, a thin metal film is deposited on the ultrathin membrane as described herein. The metal film may be made of silver, gold, copper and/or nickel.

An active transport of compounds such as a molecule or ion through the ultrathin membrane may be supported by a transporter molecule that is a bioactive substance, including co-transporters and the like. Such process is herein specifically understood as active transport.

A membrane transport protein (or simply transporter) is a membrane protein involved in the movement of ions, small molecules, or macromolecules, such as another protein, across a (biological) membrane. Transport proteins may assist in the movement of substances by facilitated diffusion or active transport.

Transporter entities are selected from proteins belonging to the group of electrochemical potential-driven transporters, such as for example, proton-dependent oligopeptide transporter, lactose permease, glycoside-pentoside-hexuronide transporter, drug/metabolite transporter or to the group of primary active transporters, such as for example maltose transporter, vitamin B12 importer, or bacterial ABC lipid flippase.

Thus, a further aspect of the invention relates to an active transport of compounds such as a molecule or ion through the ultrathin membrane. The aim is achieved by imparting the perforated membranes with the ability to actively transport a selected compound or a group of compounds with high selectivity. This goal is achieved by utilizing the precision and efficiency of biologically derived transport assemblies (e.g., membrane transport proteins) by incorporation into the pores of the membrane. The transport assembly should be tightly bound (e.g., covalent attachment) to the membranes and in the perforations. This is done with by immobilization techniques and facilitated by a good fit of the pore size to the transport assembly. A further aim is to have the transport assembly actively pump the selected compound(s) across the membrane and achieve an accumulation against the developing concentration gradient. The energy required to establish an accumulation on one side may be provided externally (e.g., by cofactors or by exploitation of energy stored in a chemical gradient).

Starting point for an active transport may for example be an *E.coli* strain (BL21 DE3) engineered (with a pET 30a plasmid) to recombinantly produce the *E.coli* transport protein lactose permease (encoded by the *E.coli* gene LacY) with an affinity tag (6xHis) fused to the C-terminal end of the native protein. Recombinant production is initiated by induction with isopropyl-thiogalactoside (IPTG). After induction and protein expression the harvested cells are mechanically disrupted, the cell debris removed by centrifugation and the remaining membrane pieces are collected by ultracentrifugation. The transporter lactose permease is then obtained by solubilization from the membrane fragments with the detergent n-dodecyl β-D-maltoside (DDM) and a subsequent affinity (metal chelate) chromatography step based on nickel. The purified transporter is then reconstituted into peptide based (membrane scaffold protein 1D1, MSP1D1) nanodisc assemblies. The nanodiscs are formed with the phospholipid 1,2-dimyristoyl-sn-glycero-3-phosphocholine (DMPC) above the critical micelle concentration. To obtain the final transporter assembly the nanodiscs associated with lactose permease are separated from the rest by an additional metal chelate chromatography step.

One side of the perforated membrane is incubated with a solution of glutaraldehyde as an activation step for covalent immobilization. The activated side of the membrane is then incubated with the nanodisc based transport protein solution. Coordination of the transporter assemblies onto the membrane surface and into the perforations is then initiated by adding increasing amounts of a (preferably kosmotropic) salt such as ammonium sulfate to the nanodisc solution. The peptide based scaffold surrounding the lactose permease undergoes reactions with the active aldehyde groups on the membrane pore walls for a covalent attachment. Directionality of immobilization will be governed by the self-assembling nature of the nanodisc layer forming on the membrane surface.

Active transport of lactose is demonstrated with a photometric assay. In the setup for this assay the functionalized membrane is separating two compartments where one is constantly monitored by a spectrophotometer in the UV-Vis range. Both compartments contain a lactose solution of equal composition (pH, buffer-, salt- and lactose concentration) and equilibrium is demonstrated by the stagnant UV spectrum of the monitored compartment. Active transport is then initiated by changing the pH of one compartment without changing the lactose concentration (or any other condition) by adding a small amount of a sufficiently acidic solution with the same lactose concentration. A change in the UV spectrum over time indicates that lactose transport across the membrane has been initiated. This can be confirmed only if the spectral change is characteristic for lactose. The direction of change must also be consistent with the direction of the pH gradient such that the transport of lactose is in the same direction as the flow of H+ as given by the gradient (symport).

## Examples

The Examples which follow are set forth to aid in the understanding of the invention but are not intended to, and should not be construed to limit the scope of the invention in any way. The Examples do not include detailed descriptions of conventional methods. Such methods are well known to those of ordinary skill in the art.

## Materials

HQ-H$_2$O with a conductivity of 0.055 $\mu$S cm$^{-1}$ was used for the preparation of all aqueous solutions. Water purified by reverse osmosis (RO-H$_2$O) was used in all other instances. Bulk chemicals for buffer preparation, chloroform, polymers and proteins were obtained from Sigma-Aldrich. The polymers were used as received without further purification. Poly[(o-cresyl glycidyl ether)-co-formaldehyde] (PCGF, Mn = 870) and branched polyethyleneimine (PEI, Mn = 10 000) were dissolved in chloroform (CHCl$_3$) to final concentrations of (PCGF) = 20 mg mL$^{-1}$ and (PEI) = 10 mg mL$^{-1}$. Chloroform was handled and added in appropriate amounts with a glass syringe as judged by weight on a balance assuming a density of 1.48 g mL$^{-1}$. The polymers were allowed to dissolve at room temperature for at least 30 minutes before they were filtered over PTFE syringe filters with a nominal pore size of 0.22 $\mu$m and stored in glass vials with PTFE screw caps. Chloroform used for the dilution of polymer solutions was also filtered over PTFE syringe filters with a nominal pore size of 0.22 $\mu$m. Poly(sodium 4-styrenesulfonate) (PSS, Mw = 70 000) was dissolved to a concentration of 50 mg mL$^{-1}$ in water, filtered over PVDF filters with a nominal pore size of 0.45 $\mu$m and stored in sterile Bio-One tubes from Greiner.

The proteins cytochrome c, myoglobin, bovine serum albumin and thyroglobulin were used as received. To remove impurities that would interfere with subsequent spectrophotometric tests the formulations of apoferritin, alcohol dehydrogenase and aldolase were purified before use. Apoferritin was purified by dialysis (Slide-A-Lyzer™ 10K MWCO, Thermo Fisher) overnight against a 1000-fold excess volume of target buffer. Alcohol dehydrogenase was purified by three 1:10 buffer changes in centrifugal filtration tubes (Amicon® Ultra 15 50kDa, Millipore). Aldolase was purified by 1:10 three buffer changes in centrifugal filtration tubes after (Amicon® Ultra 0.5 100kDa, Millipore). All proteins were dissolved in the respective buffer to a concentration of 1 g L$^{-1}$. Blue Dextran was dissolved to a concentration of 10 g L$^{-1}$.

## Example 1 - Membrane spin-coating

Spin coating was done with a WS650Mz-23NPP Spincoater (Laurell). Silicon wafers with 50.8 mm diameter served as solid casting substrates. They were cleaned with laboratory wipes, thoroughly rinsed with water to remove residual organic material and dried in a stream of nitrogen before they were immersed for at least 30 minutes in a 3:1 mixture of sulfuric acid and hydrogen peroxide (piranha solution) tempered at 60 °C. Note that care must be taken when preparing and handling this solution as it reacts violently with organic matter! After this treatment, silicon wafers were thoroughly rinsed with water. Thin films of PSS serving as sacrificial layers were formed by coating 300 $\mu$L of aqueous PSS solution at 3000 rpm. Ultrathin membranes were prepared by coating a mixture of PCGF and PEI solution (in Chloroform) onto a previously and freshly produced sacrificial PSS layer at 5000 rpm. Casting solutions were prepared by mixing the precursor solutions at volumetric ratios leading to PEI:PCGF weight ratios of either 1.2:1 (67.5 $\mu$L PCGF and 165 $\mu$L PEI), 1.5:1 (60 $\mu$L PCGF and 180 $\mu$L PEI) or 1.9:1 (52.5 $\mu$L PCGF and 195 $\mu$L PEI). These mixtures were further diluted with 80 $\mu$L of pure chloroform and then used for spin-coating.

## Example 2 - Membrane dip-coating

Dip coating was done with pieces of silicon wafers which were clipped to be roughly rectangular and cleaned as described in the spin-coating section above. Dip-coated thin films were obtained by immersing the wafer pieces into the respective casting solution and vertically withdrawing at a constant pace. The customized dip-coating setup allowed adjustment of withdraw speeds between 10 and 400 mm min$^{-1}$. Sacrificial PSS layers were formed with the aqueous PSS solution and a coating speed of 15 mm min$^{-1}$. Membrane casting solutions were prepared with a PEI:PCGF weight ratio of 1.5:1 (volume ratio of 3:1) and diluted with chloroform by a factor of 1.25. Dip-coating was done by immersing wafers bearing a sacrificial layer at a speed of 100 mm min$^{-1}$ to allow for proper wetting and withdrawing at 400 mm min$^{-1}$.

## Example 3 - Curing, selective dissolution and membrane release:

After the ultrathin epoxy films had been cast using the respective method covalent crosslinking of the resin was induced by heating the wafer to 120 °C for at least 5 minutes. The membranes were then allowed to cool to room temperature and rinsed three times with chloroform to selectively dissolve non-crosslinked domains of PEI for pore formation. After this production process perforated nanomembranes could be detached from the casting substrate by dissolving the sacrificial layer in RO-H2O. To ease membrane pick-up the PSS layer was allowed to dissolve while the wafer was slowly immersed while tilted to roughly 30 degrees so that the membranes are forced to stay atop of the water surface.

## Example 4 - Membrane Characterization

*Microscopy*

Scanning electron microscopy images were obtained with a FEI QuantaTM 250 field-emission environmental scanning electron microscope with a Schottky field emission gun (FEI Europe B.V.) operated at 15 kV in a low pressure atmosphere of < 1 x 10-6 mbar. For imaging, membrane samples were picked up from the water surface onto small pieces of silicon wafer and left to dry before they were sputter-coated with a thin gold layer to avoid charge accumulation. Membrane samples for atomic force microscopy investigations were picked up onto silicon wafer pieces and dried in air before use. Imaging was done with a Nanowizard II atomic force microscope (JPK Instruments). SiN cantilevers DNP-S10 (Bruker) with a spring constant of 0.12 N m$^{-1}$ and a nominal tip radius of 10 nm were used in contact mode in air. Images were obtained with a 512-line resolution and a line scan frequency of 2Hz. Optical microscopy images were obtained with a Stereomicroscope.

*Contact angle measurements*

Membrane pieces were carefully picked up onto silicon wafer pieces from the surface of water without any wrinkles and were allowed to dry in air. A DSA30 contact angle goniometer (Krüss) was used to obtain optical images of the contact angle formed between the membrane surface and 3 $\mu$L HQ-H$_2$O droplets in air. Both observable contact angles of each image were evaluated from 3 independent droplets on the membrane.

*Bulging tests*

The membranes are picked up to be freely suspended over the circular opening of a 9.7 mm diameter tube. They are gradually pressurized until membrane rupture and the corresponding deflection is monitored and captured by a digital camera with image dimensions of 791 x 588 pixels and a resolution of 265 pixels mm$^{-1}$. Thin film stress and strain are derived from the relation of pressure and corresponding deflection. From this relation the ultimate tensile strength, residual stress and biaxial modulus can be inferred.

*Diffusion tests*

The diffusion of proteins across the membranes was investigated in real time in a spectrophotometer. A plastic tube of 4.7 mm diameter was used to pick up membrane pieces so that one tube opening would be sealed by the ultrathin film. 45 $\mu$L of the respective protein solution mixed with 5 $\mu$L of Blue Dextran solution were transferred into the tube by pipetting directly onto the surface of the freely suspended membrane. 960 $\mu$L of permeate solution were contained in a quartz cuvette with 10 mm path length. The tube was then inserted into the cuvette with the membrane and retentate solution side facing down so that the membrane would be immersed in permeate solution. In order to accommodate for the tube holding the membrane and the retentate compartment the cuvette had to have a cross-section of 10 x 10 mm. UV-VIS absorbance spectra of the permeate solution were then recorded every 30 seconds. The increase of absorbance at characteristic wavelengths per time interval and the respective molar extinction coefficient could be used to derive diffusive flux of protein across the membrane. In order for the edges of the membrane pieces not to be immersed and thereby preclude convective transport past the membrane the fill level of the cuvette with permeate solution had to be adjusted accordingly.

## Example 5 - Polymer surface and thin film growth

For this example, the nanomembranes were directly cast onto glass coverslips. Metal thin films were deposited with a DC-magnetron sputter coater with Argon (99.999 %) as the sputtering gas at a pressure of 0.9 - 1.2 x 10$^{-2}$ mbar. The mass equivalent thickness (d) of the growing film was monitored with a quartz crystal microbalance. For the investigation of the resistance (R) of the thin films, *in situ* resistance measurements were conducted during sputter deposition (Fig. 6a). To this end, the pristine polymer films were first sputter-coated with two 50 nm thick rectangular gold patches separated by a 4 mm gap (Fig. 6b). These patches of gold served as electrodes and were contacted to an LCR-meter with copper wires. The ultrathin metal films were grown on a 4 mm wide strip between the two gold electrodes while the rest of the polymer surface was masked. This resulted in a 4 x 4 mm$^2$ thin film growing between the electrodes that is being measured for its resistance (Fig. 6b and c). The growth rate was maintained within 0.04 - 0.06 nm sec$^{-1}$ for all metals by adjusting the potential and the resulting plasma current.

The resistance was thereby obtained directly as sheet resistance (R$_\square$, Ohm per square) and correlated to the corresponding mass equivalent thickness for each experiment similar to Fig. 6d. For each metal, two experiments were conducted and the resulting metal insulator transition in the R vs d relation was fit to the function

$$R_\square = A * (d - d_c)^{-t}$$

where d$_c$ is the critical thickness, t is the universal critical exponent and A is a constant of proportionality. The resulting graphs are summarized in Fig. 7 and the resulting parameters in Table 1.

All transition regions (as marked by the shaded areas in Fig. 7) could be fitted reasonably well to the above relation and the critical exponents were found to range from 1.24 to 1.37 which is in close proximity to theoretical predictions. Such systems are characterized by the growth of conducting clusters on a non-conducting plane or in a non-conducting space which undergo percolation to form a conducting network. This is equivalent to metal clusters growing on a non-conducting substrate as is the case in this example.

Table 1

| Metal | $d_c$ | t |
| --- | --- | --- |
| Gold | $6.16 \pm 0.05$ | $1.32 \pm 0.01$ |
| Silver | $4.82 \pm 0.03$ | $1.27 \pm 0.03$ |
| Copper | $2.47 \pm 0.15$ | $1.31 \pm 0.06$ |
| Nickel | $2.94 \pm 0.33$ | $1.30 \pm 0.01$ |

Thus, the acquired data indicate that in all experiments the thin film formation progressed from nucleation of clusters to a stage of coalescence and through the percolation into a conducting network to a final uniform film.

**Claims**

1. An ultrathin membrane having a thickness of less than about 100 nm and exhibiting different textured surfaces.

2. The ultrathin membrane according to claim 1, wherein one side to the membrane exhibits an uneven textured surface when compared to the other side of the membrane.

3. The ultrathin membrane according to claim 1 or 2, comprising pores of average diameter of 50 nm or less.

4. The ultrathin membrane according to any of claims 1 to 3, wherein the membrane is made of two-components.

5. The ultrathin membrane according to claim 4, wherein the components are selected from an epoxy resin and a curing agent, preferably polyethyleneimine.

6. The ultrathin membrane according to claim 5, wherein the epoxy resin is poly[(o-cresyl glycidyl ether)-co-formaldehyde] (PCGF).

7. The ultrathin membrane according to any of claims 1 to 6 further comprising a metal coating.

8. A method for producing an ultrathin membrane comprising the following steps:

   a. providing a sacrificial layer on the surface of a solid support for obtaining a substrate,
   b. providing a casting solution comprising a polymer, a curing agent and a solvent,
   c. applying the casting solution on the surface of said substrate,
   d. evaporating the solvent,
   e. curing the polymer network, and
   f. removing soluble components.

9. The method according to claim 8, wherein the sacrificial layer is a poly(sodium-4-styrenesulfonate) (PPS) layer.

10. The method according to claim 8 or 9, wherein the casting solution comprised an epoxy resin and a curing agent.

11. The method according to any of claims 8 to 10, wherein the substrate is immersed in the casting solution and withdrawn at a constant speed.

12. The method according to any of claims 8 to 11, wherein curing of the polymer network is induced by heating the substrate.

13. The method according to any of claim 8 to 12 further comprising the step of depositing a thin metal film on one surface of the membrane.

14. A method for active transport of at least one compound of interest, wherein transporter entities are assembled to the pores of the ultrathin membrane.

15. The method according to claim 14, wherein the transporter entities are selected from proteins belonging to the group of electrochemical potential-driven transporters, preferably proton-dependent oligopeptide transporter, lactose permease, glycoside-pentoside-hexuronide transporter, drug/metabolite transporter or to the group of primary active transporters, preferably maltose transporter, vitamin B12 importer, or bacterial ABC lipid flippase.

Fig. 1

Fig. 2

Fig. 3

Fig. 4

Fig. 5

Fig. 6

Width of masking (4 mm)

Distance of gold electrodes (4 mm)

Thickness

Resistance

Percolation

Resistance

Thickness

Fig. 7

Europäisches
Patentamt

European
Patent Office

Office européen
des brevets

## EUROPEAN SEARCH REPORT

Application Number

EP 19 17 1246

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 017 055 A1 (RIKEN [JP]) 21 January 2009 (2009-01-21) * paragraphs [0028] - [0052]; claims 3,6,11; figure 3; examples 1-4,6 * | 1,2,4-13 | INV. B01D67/00 B01D69/02 B01D69/12 B01D69/14 |
| X,D | WO 2014/206735 A1 (ACIB GMBH [AT]; UNIVERSITÄT FÜR BODENKULTUR WIEN [AT]) 31 December 2014 (2014-12-31) * paragraphs [0026], [0038], [0043], [0075], [0136]; claims 9,12-14; examples 1,6 * | 1-15 | B01D71/46 B01D71/60 C08J9/26 C08J9/36 B01D69/06 |
| X | ZIMNITSKY D ET AL: "Perforated, Freely Suspended Layer-by-Layer Nanoscale Membranes", LANGMUIR, AMERICAN CHEMICAL SOCIETY, US, vol. 24, no. 12, 17 June 2008 (2008-06-17) , pages 5996-6006, XP002608915, ISSN: 0743-7463, DOI: 10.1021/LA7038575 [retrieved on 2008-05-06] * page 6001, column 1 * * "conclusion"; page 6005 * * abstract * * figures 1(f), 8 * | 1-4 | |
| X | US 2016/152008 A1 (OGATA TOSHIYUKI [JP] ET AL) 2 June 2016 (2016-06-02) * figure 2 * * paragraphs [0029], [0038] - [0040], [0065] - [0066], [0073], [0078], [0082], [0088], [00127]; figure 2 * | 1-6,8-12 | |
| X | JP 2015 100778 A (HITACHI LTD) 4 June 2015 (2015-06-04) * paragraphs [0018] - [0034]; figure 1 * | 1-6,8-12 | |

TECHNICAL FIELDS SEARCHED (IPC)

B01D
C08J

-/--

The present search report has been drawn up for all claims

| Place of search | Date of completion of the search | Examiner |
|---|---|---|
| Munich | 10 September 2019 | Williams, Jennifer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 19 17 1246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/138535 A1 (GOELZHAEUSER ARMIN [DE] ET AL) 7 June 2012 (2012-06-07) <br> * paragraph [0023]; claims 1,5 * <br> ----- | 1-4,7, 14,15 | |

TECHNICAL FIELDS
SEARCHED        (IPC)

The present search report has been drawn up for all claims

| Place of search | Date of completion of the search | Examiner |
|---|---|---|
| Munich | 10 September 2019 | Williams, Jennifer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 19 17 1246

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2019

| Patent document cited in search report | | | Publication date | Patent family member(s) | | | Publication date |
|---|---|---|---|---|---|---|---|
| EP | 2017055 | A1 | 21-01-2009 | AT | 507051 | T | 15-05-2011 |
| | | | | EP | 2017055 | A1 | 21-01-2009 |
| | | | | JP | 5207467 | B2 | 12-06-2013 |
| | | | | JP | WO2007122884 | A1 | 03-09-2009 |
| | | | | US | 2009092814 | A1 | 09-04-2009 |
| | | | | WO | 2007122884 | A1 | 01-11-2007 |
| WO | 2014206735 | A1 | 31-12-2014 | EP | 3013462 | A1 | 04-05-2016 |
| | | | | US | 2016151747 | A1 | 02-06-2016 |
| | | | | WO | 2014206735 | A1 | 31-12-2014 |
| US | 2016152008 | A1 | 02-06-2016 | EP | 3020754 | A1 | 18-05-2016 |
| | | | | TW | 201512256 | A | 01-04-2015 |
| | | | | US | 2016152008 | A1 | 02-06-2016 |
| | | | | WO | 2015005382 | A1 | 15-01-2015 |
| JP | 2015100778 | A | 04-06-2015 | NONE | | | |
| US | 2012138535 | A1 | 07-06-2012 | DE | 102009034575 | A1 | 27-01-2011 |
| | | | | EP | 2427265 | A1 | 14-03-2012 |
| | | | | JP | 6047199 | B2 | 21-12-2016 |
| | | | | JP | 2013500146 | A | 07-01-2013 |
| | | | | JP | 2015213906 | A | 03-12-2015 |
| | | | | US | 2012138535 | A1 | 07-06-2012 |
| | | | | WO | 2011009621 | A1 | 27-01-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014206735 A

**Non-patent literature cited in the description**

- **MOKARIAN-TABARI P. et al.** *Eur. Phys. J. E,* 2010, vol. 33, 283
- **WATANABE H. ; KUNITAKE T.** *Adv. Mater.,* 2007, vol. 19, 909
- **HORA, J. et al.** *Advanced Engineering Materials,* vol. 20, 1700868